# EUROPÄISCHE PATENTSCHRIFT

(11) **EP 1 072 382 B1**
(45) Veröffentlichungstag und Bekanntmachung des Hinweises auf die Patenterteilung: **28.05.2003**
(21) Anmeldenummer: 00114498.9
(22) Anmeldetag: 06.07.2000
(51) Int. Cl.: B29C 45/16, B60Q 3/04

(54) **Verfahren zur Herstellung eines Mehrkomponenten-Kunststoffspritzgussteils**
Method for the production of a multi-component injection moulded article
Procédé de fabrication d'un article de matière plastique moulé par injection à plusieurs composants

(30) Priorität: 26.07.1999 DE 19935019
(43) Veröffentlichungstag der Anmeldung: 31.01.2001
(73) Patentinhaber: Siemens Aktiengesellschaft, 80333 München (DE)
(72) Erfinder: Langer, Franz, 55276 Oppenheim (DE)

(56) Entgegenhaltungen:
- EP-A- 0 984 249
- DE-A- 3 425 029
- US-A- 5 983 827
- PATENT ABSTRACTS OF JAPAN vol. 1997, no. 04, 30. April 1997 (1997-04-30) -& JP 08 327407 A (NIPPON SEIKI CO LTD), 13. Dezember 1996 (1996-12-13)

## Beschreibung

Die Erfindung betrifft ein Verfahren zur Herstellung eines Mehrkomponenten-Spritzgußteils mit einer optischen Anzeigefunktion, insbesondere zum Einsatz in einem Kraftfahrzeug, durch Herstellen eines ersten Spritzgußteils aus einer lichtdurchlässigen Kunststoffmasse als Lichtleitelement mit einer Lichteintritts- und einer Lichtaustrittsfläche und teilweises Umspritzen des Lichtleitelements mit einer zweiten, lichtundurchlässigen Kunststoffmasse. Weiterhin betrifft die Erfindung ein Mehrkomponenten-Kunststoffspritzgußteil mit einer Anzeigefunktion.

Kunststoffspritzgußteile mit einer optischen Anzeigefunktion werden in vielfältiger Weise in Kraftfahrzeugen eingesetzt, beispielsweise als durchleuchtbare Anzeigefelder, Zeigerelemente oder als beleuchtbare Drucktasten für Tastenschalter. Das Fertigteil besteht dabei in der Regel aus mehreren Komponenten, wobei die Einzelkomponenten entweder unabhängig voneinander hergestellt und anschließend miteinander verklebt werden können oder in einem Mehrkomponenten-Spritzgußverfahren hergestellt werden. Die getrennte Herstellung der Einzelkomponenten und das anschließende Verkleben der Komponenten ist jedoch zeitaufwendig und führt auch nicht immer zu optisch befriedigenden Ergebnissen. Bei Anwendung eines Mehrkomponenten-Spritzgußverfahrens können solche Teile dagegen automatisiert hergestellt werden.

Ein Mehrkomponenten-Kunststoffspritzgußteil zur Verwendung in einem Kraftfahrzeug kann beispielsweise aus drei Komponenten bestehen, nämlich einer ersten lichtdurchlässigen Komponente, einer zweiten lichtundurchlässigen Komponente, die die lichtdurchlässige Komponente als Rahmen umschließt, sowie einer Dekorfolie, die auf die lichtdurchlässige Komponente aufgebracht ist. Durch eine hinter der lichtdurchlässigen Komponente angebrachte Lichtquelle kann eine Durchleuchtung erzielt werden.

DE-A-4 433 580 offenbart ein Verfahren gemäß dem Oberbegriff des Anspruchs 1 und ein Mehrkomponenten-Kunststoff spritzgußteil gemäß dem Oberbegriff des Anspruchs 12.

Hierzu wird in einem ersten Arbeitsgang zunächst die lichtdurchlässige Komponente als Lichtleitelement hergestellt. Danach wird eine Kunststoffolie auf eine Fläche des bis zum Erreichen der Formstabilität abgekühlten Lichtleitelements aufgebracht. In einem weiteren Schritt wird die Kunststoffolie gegen das Lichtleitelement druckbeaufschlagt und durch die Druckbeaufschlagung mit dem Lichtleitelement materialschlüssig verbunden. Anschließend wird die Folie in einem Spritzgußwerkzeug mit einem lichtundurchlässigen Material hinterspritzt, so daß das Rahmenelement gebildet wird.

Nachteilig ist bei einem auf diese Weise hergestellten Spritzgußteil jedoch, daß es von einer Lichtquelle im wesentlichen nur geradlinig durchleuchtet werden kann. Eine gezielte Lichtumlenkung durch Totalreflexion im Lichtleitelement läßt sich bei den bekannten Spritzgußteilen nur dann realisieren, wenn die Reflexionsfläche eine äußere Oberfläche des Lichtleitelements ist. Sobald die als Reflexionsfläche vorgesehene Oberfläche des Lichtleitelements nämlich von der zweiten lichtundurchlässigen Komponenten umspritzt wird, findet im wesentlichen keine Reflexion des eingestrahlten Lichtes, sondern eine Absorption statt.

Auch bei der Beleuchtung von als Zeiger ausgebildeten Lichtleitelementen für Kraftfahrzeugarmaturen können Probleme der Lichtführung auftreten. Wird beispielsweise nur eine Beleuchtung der Zeigerspitze gewünscht, so muß das über die Zeigerachse eintretende Licht umgelenkt werden. Gleichzeitig ist jedoch meist der Zeiger mit Ausnahme der Zeigerspitze und der Lichteintrittsfläche von einem lichtundurchlässigen Material abgedeckt. Daher tritt auch hier anstelle einer Reflexion an einer umspritzten Oberfläche des Lichtleitelementes eine Absorption auf, wenn sich die zweite lichtundurchlässige Komponente mit dieser Oberfläche verbindet. Es ist bereits bekannt, ein Lichtleitelement mit einer lichtundurchlässigen Kunststoffmasse zu umspritzen, die sich schlecht oder gar nicht mit dem Lichtleitelement verbindet. Solche Kunststoffmassen, die sich praktisch nicht mit anderen Materialien verbinden, sind beispielsweise Polyoxymethylen (POM) oder Polypropylen (PP). Durch die geringe Haftung dieser Kunststoffmassen mit dem Lichtleitelement soll erreicht werden, daß zwischen der lichtundurchlässigen Kunststoffmasse und der Oberfläche des Lichtleitelementes, die als Reflexionsfläche vorgesehen ist, ein Luftspalt verbleibt, so daß eine Lichtumlenkung durch Totalreflexion möglich ist. Häufig müssen solche Teile aber, beispielsweise durch leichtes Abhebeln der lichtundurchlässigen Kunststoffmasse, nachbearbeitet werden, um den erforderlichen Luftspalt zu bilden.

Aufgabe der Erfindung ist es daher, ein Verfahren zur Herstellung eines Mehrkomponenten-Kunststoffspritzgußteils der eingangs genannten Art derart auszubilden, daß mit hoher Fertigungssicherheit eine innere Reflexionsfläche im Spritzgußteil erhalten wird, die eine Lichtumlenkung und damit eine größere Freiheit bei der Anordnung der Lichtaustrittsflächen und der Lichtquellen ermöglicht. Eine weitere Aufgabe der Erfindung ist es, ein entsprechendes Mehrkomponenten-Kunststoffspritzgußteil anzugeben.

Die erstgenannte Aufgabe wird durch die Merkmale gemäß dem kennzeichenden Teil des Anspruchs 1 gelöst, daß das Lichtleitelement einen stegartigen Fortsatz aufweist, der durch eine Krafteinwirkung so deformiert wird, daß zwischen dem Fortsatz und einer Teilfläche des Lichtleitelements ein spaltförmiger Hohlraum gebildet und zumindest der Fortsatz an der Aussparung des Hohlraums mit der lichtundurchlässigen Kunststoffmasse umspritzt wird. Die Teilfläche des Lichtleitelementes, die an den so gebildeten spaltförmigen Hohlraum des Lichtleitelementes angrenzt, kann somit als Reflexionsfläche für Totalreflexion genutzt werden. Die Deformation des Fortsatzes zur Erzeugung des spaltförmigen Hohlraumes kann dabei vor dem Umspritzen des Lichtleitelementes mit der zweiten Kunststoffmasse auf mechanische Weise erfolgen. Hierzu kann beispielsweise die Spritzgußform, in der das Lichtleitelement hergestellt wird, mechanisch bewegliche Teile aufweisen, die nach dem Spritzen des Lichtleitelementes auf den Fortsatz einwirken und diesen deformieren. Anschließend wird das Lichtleitelement in einer Spritzgußform mit der lichtundurchlässigen Kunststoffmasse umspritzt.

In einer alternativen Ausführungsform der Erfindung kann die Deformation des Fortsatzes aber auch direkt beim Umspritzen mit der zweiten Kunststoffmasse durch den dabei auftretenden Druck und/oder die dabei auftretende Temperatur erfolgen. Hierbei ist eine Abstimmung der Wandstärke des Fortsatzes und der Druck- und/oder Temperaturbedingungen beim Umspritzen mit der zweiten Kunststoffmasse erforderlich. Die entsprechenden optimalen Parameter können jedoch mit wenigen Versuchen ermittelt werden. Wichtig ist dabei, daß die Deformation des Fortsatzes derart erfolgt, daß der spaltförmige Hohlraum gebildet wird. Dies ist deshalb von Bedeutung, da eine Totalreflexion nur an einer Grenzfläche eines optische dichteren Mediums zu einem optisch dünneren Medium erfolgen kann.

In einer Ausgestaltung der Erfindung kann das Lichtleitelement vor dem Umspritzen mit der zweiten Kunststoffmasse mit einer Kunststoffolie materialschlüssig verbunden werden, die eine sichtbare Oberfläche des Spritzgußteils bildet. Auf diese Weise lassen sich beispielsweise Drucktasten für Tastenschalter herstellen. Das Verschweißen der Kunststoffolie mit dem Lichtleitelement kann dabei insbesondere nach dem aus der DE 44 33 580 A1 bekannten Verfahren erfolgen. Zur Herstellung einer Drucktaste wird die Kunststoffolie dabei in der Regel teilweise mit der lichtundurchlässigen Kunststoffmasse hinterspritzt.

Als geeignete Kunststoffmassen zur Herstellung des Mehrkomponenten-Spritzgußteils können insbesondere amorphe thermoplastische Kunststoffmassen verwendet werden. Besonders geeignet sind hierbei Polymethylacrylat (PMMA), Polycarbonat (PC) oder Polystyrol. Insbesondere kann das Lichtleitelement auch aus einem amorphen thermoplastischen Kunststoffmaterial bestehen und die lichtundurchlässige Komponente aus einem opaken, amorphen thermoplastischen Kunststoff wie ABS (Acrylnitril-Butadien-Styrol), oder aus einem Blend wie PC/ABS bzw. PC/PBT, oder aus einem teilkristallinen Kunststoff wie PA (Polyamid) und PBT.

Um die Kunststoffolie mit dem Lichtleitelement zu verschweißen, ist vorzugsweise vorgesehen, daß die Kunststoffolie gegen das Lichtleitelement druckbeaufschlagt und durch die Druckbeaufschlagung mit der Platte materialschlüssig verbunden wird. Dies kann insbesondere dadurch erfolgen, daß das Lichtleitelement nach der Herstellung im Spritzgußverfahren bis zum Erreichen der Formstabilität abkühlt und die Kunststoffolie auf eine Fläche des bis zum Erreichen der Formstabilität abgekühlten Lichtleitelements aufgebracht wird.

Ein Mehrkomponenten-Kunststoffspritzgußteil mit einer Anzeigefunktion gemäß dem Anspruch 12 geht aus von einem Spritzgußteil aus mindestens einer als Lichtleitelement ausgebildeten lichtdurchlässigen Komponente und mindestens einer lichtundurchlässigen Komponente, die das Lichtleitelement teilweise umschließt, wobei zur Realisierung der Anzeigefunktion eine Lichtleitung von einer Lichteintrittsfläche zu einer Lichtaustrittsfläche des Lichtleitelements erfolgt. Erfindungsgemäß ist vorgesehen, daß das Lichtleitelement eine innere Reflexionsfläche aufweist, an der das durch die Lichteintrittsfläche einfallende Licht durch Totalreflexion umgelenkt wird und die durch einen Spalt von einem weiteren Teilbereich (Fortsatz) des Lichtleitelements getrennt ist, wobei zumindest der weitere Teilbereich von der lichtundurchlässigen Komponente abgedeckt ist. In einer besonderen Ausführungsform ist vorgesehen, daß das Spritzgußteil eine Kunststoffolie mit lichtdurchlässigen Bereichen aufweist, die mit dem Lichtleitelement derart verbunden ist, daß der Lichtaustritt durch die lichtdurchlässigen Bereiche der Kunststoffolie erfolgt. Die Kunststoffolie bildet dabei eine sichtbare Oberfläche des Spritzgußteils. Auf der Folie können durchleuchtbare Symbole angeordnet sein, wobei unter dem Begriff Symbole auch Buchstaben und Zahlen verstanden werden.

Bei dem erfindungsgemäßen Spritzgußteil wird die Reflexionsfläche von einer Oberfläche gebildet, die vollständig in das Spritzgußteil integriert ist. Mit anderen Worten handelt es sich bei der Reflexionsfläche nicht um eine das Spritzgußteil nach außen hin begrenzende Oberfläche. Das einfallende Licht wird in der Regel etwa senkrecht zur Lichteintrittsfläche in das Lichtleitelement eintreten, jedoch sind auch andere Eintrittswinkel möglich. Auf jeden Fall muß der Winkel, unter dem das Licht schließlich auf die Reflexionsfläche fällt, größer sein als der Winkel für Totalreflexion, der in bekannter Weise von der Brechzahl des Lichtleitelements abhängt. Insbesondere ist vorgesehen, daß die Reflexionsfläche zu der Lichteintrittsfläche des Lichtleitelementes unter einem Winkel angeordnet ist, der größer als 30° und kleiner als 70° ist, um eine nennenswerte Lichtumlenkung zu erreichen. Besonders bevorzugt wird eine Ausführungsform, bei der die Reflexionsfläche zu der Lichteintrittsfläche unter einem Winkel von etwa 45° angeordnet ist. Hierdurch wird Licht, das senkrecht zur Lichteintrittsfläche in das Lichtleitelement eintritt, um einen Winkel von 90° abgelenkt. Im Falle einer Taste kann damit erreicht werden, daß bei Anordnung einer Lichtquelle hinter der Taste der Lichtaustritt seitlich an der Taste erfolgt. Weiterhin kann erreicht werden, daß in dem Lichtelement eine Aufteilung des einfallenden Lichts in zwei räumlich getrennte Teilbündel erfolgt, wobei ein erstes Teilbündel an der Reflexionsfläche umgelenkt wird, während ein zweites Teilbündel im wesentlichen geradlinig durch das Lichtleitelement hindurchgeht.

Vorzugsweise besteht das Lichtleitelement und/oder die lichtundurchlässige Komponente aus den bereits genannten amorphen thermoplastischen Kunststoffmaterialien. Bei Verwendung dieser Materialien für die lichtundurchlässige Komponente ist vorgesehen, eingefärbtes Kunststoffmaterial zu verwenden.

Die Erfindung wird nachfolgend anhand der Ausführungsbeispiele und der Zeichnung näher erläutert. Es zeigen:
- Figur 1: ein Lichtleitelement als Vorspritzling zur Herstellung eines beleuchtbaren Zeigers,
- Figur 2: den beleuchtbaren Zeiger mit Abdeckung aus einem lichtundurchlässigen Material,
- Figur 3: einen Schnitt durch ein Zwischenprodukt zur Herstellung eines Tasters,
- Figur 4: einen Schnitt durch einen Taster, der nach dem erfindungsgemäßen Verfahren hergestellt wurde.

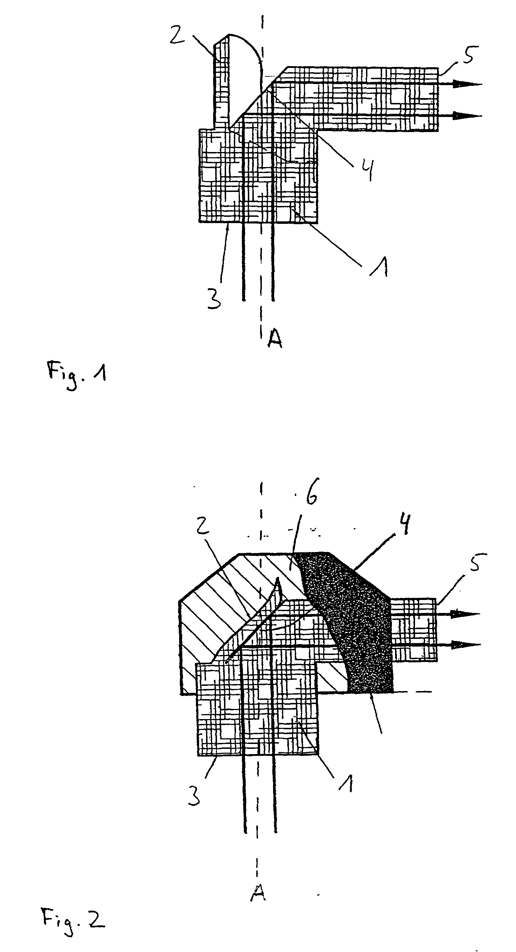

Figur 1 zeigt ein Lichtleitelement 1 aus einer glasklaren Kunststoffmasse, das als Zeiger mit der Drehachse A ausgebildet ist. Das Lichtleitelement 1 weist einen stegartigen Fortsatz 2 sowie eine Lichteintrittsfläche 3, eine als Reflexionsfläche 4 wirkende Oberfläche sowie eine Lichtaustrittsfläche 5 auf. Die Reflexionsfläche 4 ist eine Grenzfläche zwischen dem Lichtleitelement 1 und der das Lichtleitelement umgebenden Luft, die ein optisch dünneres Medium als die Kunststoffmasse ist, so daß an der Reflexionsfläche 4 eine Totalreflexion erfolgen kann. Der Fortsatz 2 wird anschließend entweder rein mechanisch oder durch die beim Umspritzen mit der zweiten Kunststoffmasse herrschenden Druck- und/oder Temperaturbedingungen so deformiert, daß zwischen dem Fortsatz 2 und der Reflexionsfläche 4 ein spaltförmiger Hohlraum gebildet wird.

In Figur 2 ist das Fertigteil nach dem Umspritzen mit der zweiten Kunststoffmasse dargestellt. Der Fortsatz 2 ist nunmehr deformiert und bildet zur Reflexionsfläche 4 einen spaltförmigen Hohlraum. Durch die geringe Dicke dieses spaltförmigen Hohlraumes kann die zweite Kunststoffmasse 6 nicht in den Hohlraum eindringen. Um dies sicherzustellen, kann die Deformation des Fortsatzes 2 insbesondere auch so geschehen, daß das äußere Ende des Fortsatzes 2 mit dem äußeren Ende der Reflexionsfläche 4 direkt verbunden wird, so daß zwischen dem Fortsatz 2 und der Reflexionsfläche 4 ein abgeschlossener Hohlraum entsteht. Durch den Hohlraum wird somit eine Grenzfläche für Totalreflexion zwischen dem Lichtleitelement 1 und der Luft im Hohlraum gewährleistet. Licht, das durch die Lichteintrittsfläche 3 in das Lichtleitelement 1 eintritt, wird somit durch Totalreflexion an der Reflexionsfläche 4 umgelenkt und tritt an der Lichtaustrittsfläche 5 aus dem Lichtleitelement aus. Lediglich der vordere Bereich des Lichtleitelementes mit der Lichtaustrittsfläche 5, das den beleuchtbaren Teil des Zeigers bildet, ist nicht von der lichtundurchlässigen Masse 6 umspritzt. Somit kann in einem Mehrkomponenten-Spritzgußverfahren ein Zeigerelement für Kraftfahrzeugarmaturen mit einer Abdeckung hergestellt werden, wobei gleichzeitig jedoch eine Lichtumlenkung im Zeigerelement sichergestellt ist.

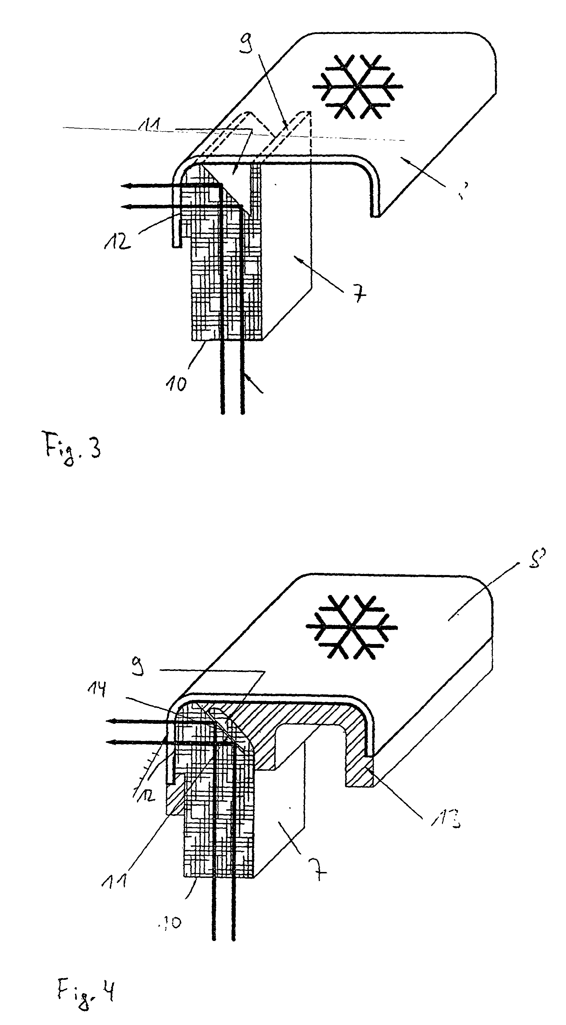

Anhand der Figuren 3 und 4 wird die Herstellung einer Drucktaste für Tastenschalter erläutert.

Figur 3 zeigt dazu einen Schnitt durch ein Zwischenprodukt. Zu sehen ist das Lichtleitelement 7, das mit einer Kunststoffolie 8 materialschlüssig verbunden ist. Das Lichtleitelement 7 weist einen Fortsatz 9 auf, sowie eine Lichteintrittsfläche 10, eine Reflexionsfläche 11 und eine Lichtaustrittsfläche 12. Das Lichtleitelement 7 wird als Spritzgußteil aus einem glasklaren Kunststoffmaterial hergestellt. Anschließend wird die Kunststoffolie 8 mit dem Lichtleitelement 1 verbunden. Dies kann insbesondere nach dem aus der DE-A-4 433 580 bekannten Verfahren erfolgen. Dazu wird das Lichtleitelement 7 im Spritzgußverfahren hergestellt und bis zum Erreichen einer Formstabilität abgekühlt. Danach wird die Kunststoffolie 8 auf eine Fläche des bis zum Erreichen der Formstabilität abgekühlten Lichtleitelements 7 aufgebracht. In einem weiteren Schritt wird anschließend die Kunststoffolie 8 gegen das Lichtleitelement 7 druckbeaufschlagt und durch die Druckbeaufschlagung mit dem Lichtleitelement 7 materialschlüssig verbunden. Es ist dabei darauf zu achten, daß die Kunststoffolie 8 nicht mit dem Fortsatz 9 verbunden wird. Das so hergestellte Zwischenprodukt wird anschließend in einer Spritzgußform teilweise mit einem lichtundurchlässigen Kunststoffmaterial um- bzw. hinterspritzt. Durch die Wahl der Dicke des Fortsatzes 9 und des Spritzdruckes wird erreicht, daß bei diesem Umspritzen der Fortsatz 9 deformiert wird und sich so an den Lichtleitkörper 7 anlegt, daß ein spaltförmiger Hohlraum gebildet wird.

Figur 4 zeigt einen Schnitt durch das Fertigteil. Die lichtundurchlässige Kunststoffmasse 13 ist mit der Kunststoffolie 8 sowie Teilen des Lichtleitelementes 7 verbunden. Jedoch ist zwischen dem deformierten Fortsatz 9 und der Reflexionsfläche 11 ein spaltförmiger Hohlraum 14 vorhanden, so daß die Reflexionsfläche 11 an ein optisch dünneres Medium, nämlich Luft, angrenzt. Somit ist auch im Fertigteil an der Reflexionsfläche 11, die eine innere Oberfläche des Spritzgußteils bildet, eine Totalreflexion zur Lichtumlenkung weiterhin möglich. Licht, das etwa senkrecht durch die Lichteintrittsfläche 10 in das Lichtleitelement 7 eintritt, wird an der Reflexionsfläche 11 umgelenkt und tritt seitlich über die Lichtaustrittsfläche 12 aus dem Spritzgußteil aus.

## Patentansprüche

1. Verfahren zur Herstellung eines Mehrkomponenten-Spritzgußteils mit einer optischen Anzeigefunktion, insbesondere zum Einsatz in einem Kraftfahrzeug, durch Herstellen eines ersten Spritzgußteils aus einer lichtdurchlässigen Kunststoffmasse als Lichtleitelement (1, 7) mit einer Lichteintritts- (3, 10) und einer Lichtaustrittsfläche (5, 12) und teilweises Umspritzen des Lichtleitelements (1, 7) mit einer zweiten, lichtundurchlässigen Kunststoffmasse (6), **dadurch gekennzeichnet, daß** das Lichtleitelement (1, 7) einen stegartigen Fortsatz (2, 9) aufweist, der durch eine Krafteinwirkung so deformiert wird, daß zwischen dem Fortsatz (2, 9) und einer Teilfläche des Lichtleitelements (1, 7) ein spaltförmiger Hohlraum (14) gebildet und zumindest der Fortsatz (2, 9) unter Aussparung des Hohlraums (14) mit der lichtundurchlässigen Kunststoffmasse (6, 13) umspritzt wird.

2. Verfahren nach Anspruch 1, **dadurch gekennzeichnet, daß** die Deformation des Fortsatzes (2, 9) durch den beim Umspritzen mit der zweiten Kunststoffmasse (6, 13) auftretenden Druck und/oder die dabei auftretende Temperatur erfolgt.

3. Verfahren nach Anspruch 1, **dadurch gekennzeichnet, daß** die Deformation des Fortsatzes (2, 9) auf mechanische Weise vor dem Umspritzen des Lichtleitelements (1, 7) mit der zweiten Kunststoffmasse (6, 13) erfolgt.

4. Verfahren nach einem der vorhergehenden Ansprüche, **dadurch gekennzeichnet, daß** das Lichtleitelement (1, 7) vor dem Umspritzen mit der zweiten Kunststoffmasse (6, 13) mit einer eine sichtbare Oberfläche des Spritzgußteils bildende Kunststoffolie (8) materialschlüssig verbunden wird.

5. Verfahren nach Anspruch 4, **dadurch gekennzeichnet, daß** die Kunststoffolie (8) teilweise mit der zweiten Kunststoffmasse hinterspritzt wird.

6. Verfahren nach einem der vorhergehenden Ansprüche, **dadurch gekennzeichnet, daß** amorphe thermoplastische Kunststoffmassen verwendet werden.

7. Verfahren nach Anspruch 6, **dadurch gekennzeichnet, daß** als Kunststoffmassen Polymethylacrylat, Polycarbonat oder Polystyrol verwendet werden.

8. Verfahren nach Anspruch 6, **dadurch gekennzeichnet, daß** das Lichtleitelement (1, 7) aus einem amorphen thermoplastischen Kunststoffmaterial und die lichtundurchlässige Komponente aus einem opaken amorphen thermoplastischen Kunststoffmaterial oder aus einem Blend hergestellt wird.

9. Verfahren nach Anspruch 6, **dadurch gekennzeichnet, daß** das Lichtleitelement (1, 7) aus einem amorphen thermoplastischen Kunststoffmaterial und die lichtundurchlässige Komponente aus einem teilkristallinen Kunststoffmaterial hergestellt wird.

10. Verfahren nach Anspruch 4, **dadurch gekennzeichnet, daß** die Kunststoffolie (8) gegen das Lichtleitelement (1, 7) druckbeaufschlagt und durch die Druckbeaufschlagung mit der Platte materialschlüssig verbunden wird.

11. Verfahren nach Anspruch 10 **dadurch gekennzeichnet, daß** das Lichtleitelement (1, 7) nach der Herstellung im Spritzgußverfahren bis zum Erreichen der Formstabilität abkühlt und die Kunststoffolie (8) auf eine Fläche des bis zum Erreichen der Formstabilität abgekühlten Lichtleitelements (1, 7) aufgebracht wird.

12. Mehrkomponenten-Kunststoffspritzgußteil mit einer Anzeigefunktion, insbesondere zum Einsatz in einem Kraftfahrzeug, bestehend aus mindestens einer als Lichtleitelement (1, 7) ausgebildeten lichtdurchlässigen Komponente und mindestens einer lichtundurchlässigen Komponente (6, 13), die das Lichtleitelement (1, 7) teilweise umschließt, wobei zur Realisierung der Anzeigefunktion eine Lichtleitung von einer Lichteintrittsfläche (3, 10) zu einer Lichtaustrittsfläche (5, 12) des Lichtleitelements erfolgt, **dadurch gekennzeichnet, daß** das Lichtleitelement (1, 7) eine innere Reflexionsfläche (4, 11) aufweist, an der das durch die Lichteintrittsfläche (3, 10) einfallende Licht durch Totalreflexion umgelenkt wird und die durch einen Spalt (14) von einem weiteren Teilbereich des Lichtleitelements (1, 7) getrennt ist, wobei zumindest der weitere Teilbereich von der lichtundurchlässigen Komponente (6, 13) abgedeckt ist.

13. Spritzgußteil nach Anspruch 12, **dadurch gekennzeichnet, daß** das Spritzgußteil eine eine sichtbare Oberfläche des Spritzgußteils bildende Kunststoffolie (8) mit lichtdurchlässigen Bereichen aufweist, die mit dem Lichtleitelement (1, 7) derart verbunden ist, das der Lichtaustritt durch die lichtdurchlässigen Bereiche der Kunststoffolie (8) erfolgt.

14. Spritzgußteil nach Anspruch 13, **dadurch gekennzeichnet, daß** auf der Folie (8) durchleuchtbare Symbole angeordnet sind.

15. Spritzgußteil nach einem der Ansprüche 12-14, **dadurch gekennzeichnet, daß** es ein Betätigungselement eines Kraftfahrzeugs ist.

16. Spritzgußteil nach Anspruch 12, **dadurch gekennzeichnet, daß** es ein beleuchtbares Zeigerelement ist.

17. Spritzgußteil nach einem der Ansprüche 12-16, **dadurch gekennzeichnet, daß** die Reflexionsfläche (4 ,11) zu der Lichteintrittsfläche (3) des Lichtleitelements (1, 7) unter einem Winkel angeordnet ist, der größer als 30° und kleiner als 70°ist.

18. Spritzgußteil nach Anspruch 17, **dadurch gekennzeichnet, daß** die Reflexionsfläche (4, 11) zu der Lichteintrittsfläche (3) des Lichtleitelements (1, 7) unter einem Winkel von 45° angeordnet ist.

19. Spritzgußteil nach einem der Ansprüche 12-18, **dadurch gekennzeichnet, daß** das Lichtleitelement (1, 7) und/oder die lichtundurchlässige Komponente (6, 13) aus einem amorphen thermoplastischen Kunststoffmaterial besteht.

20. Spritzgußteil nach Anspruch 19, **dadurch gekennzeichnet, daß** es sich bei dem thermoplastischen Kunststoffmaterial um Polymethylmethacrylat, Polycarbonat oder Polystyrol handelt.

21. Spritzgußteil nach Anspruch 19, **dadurch gekennzeichnet, daß** das Lichtleitelement (1, 7) aus einem amorphen thermoplastischen Kunststoffmaterial besteht und die lichtundurchlässige Komponente (6, 13) aus einem opaken amorphen thermoplastischen Kunststoff oder aus einem Blend besteht.

22. Spritzgußteil nach Anspruch 19, **dadurch gekennzeichnet, daß** das Lichtleitelement (1, 7) aus einem amorphen thermoplastischen Kunststoffmaterial besteht und die lichtundurchlässige Komponente (6, 13) aus einem teilkristallinen Kunststoff besteht.

## Claims

1. Method for the production of a multi-component injection-moulded part with an optical indicating function, in particular for use in a motor vehicle, by producing a first injection-moulded part from a translucent moulding compound as a light-guiding element (1, 7) with a light-entering area (3, 10) and a light-leaving area (5, 12) and partly encapsulating the light-guiding element (1, 7) with a second, non-translucent moulding compound (6), **characterized in that** the light-guiding element (1, 7) has a web-like continuation (2, 9), which is deformed by the effect of a force in such a way that a gap-shaped hollow space (14) is formed between the continuation (2, 9) and a subarea of the light-guiding element (1, 7) and at least the continuation (2, 9) is encapsulated with the non-translucent moulding compound (6, 13) with the exclusion of the hollow space (14).

2. Method according to Claim 1, **characterized in that** the deformation of the continuation (2, 9) is performed by means of the pressure occurring during the encapsulation with the second moulding compound (6, 13) and/or the temperature thereby occurring.

3. Method according to Claim 1, **characterized in that** the deformation of the continuation (2, 9) is performed by mechanical means before the encapsulation of the light-guiding element (1, 7) with the second moulding compound (6, 13).

4. Method according to one of the preceding claims, **characterized in that** the light-guiding element (1, 7) is integrally bonded with a film of plastic (8), which forms a visible surface of the injection-moulded part, before the encapsulation with the second moulding compound (6, 13).

5. Method according to Claim 4, **characterized in that** the film of plastic (8) is partly laminated in the injection mould with the second moulding compound.

6. Method according to one of the preceding claims, **characterized in that** amorphous thermoplastic moulding compounds are used.

7. Method according to Claim 6, **characterized in that** polymethyl acrylate, polycarbonate or polystyrene are used as moulding compounds.

8. Method according to Claim 6, **characterized in that** the light-guiding element (1, 7) is produced from an amorphous thermoplastic material and the non-translucent component is produced from an opaque amorphous thermoplastic material or from a blend.

9. Method according to Claim 6, **characterized in that** the light-guiding element (1, 7) is produced from an amorphous thermoplastic material and the non-translucent component is produced from a semicrystalline material.

10. Method according to Claim 4, **characterized in that** the film of plastic (8) is pressed against the light-guiding element (1, 7) and is integrally bonded with the sheet by the applied pressure.

11. Method according to Claim 10, **characterized in that** the light-guiding element (1, 7) is cooled after production in the injection-moulding process until dimensional stability is reached and the film of plastic (8) is applied to an area of the light-guiding element (1, 7) cooled until dimensional stability is reached.

12. Multi-component injection-moulded part with an indicating function, in particular for use in a motor vehicle, comprising at least one translucent component, which is formed as a light-guiding element (1, 7) and at least one non-translucent component (6, 13), which partly encloses the light-guiding element (1, 7), the indicating function being achieved by guiding light from a light-entering area (3, 10) to a light-leaving area (5, 12) of the light-guiding element, **characterized in that** the light-guiding element (1, 7) has an inner reflection area (4, 11), on which the light impinging through the light-entering area (3, 10) is deflected by total reflection and which is separated by a gap (14) from a further subregion of the light-guiding element (1, 7), at least the further subarea being covered by the non-translucent component (6, 13).

13. Injection-moulded part according to Claim 12, **characterized in that** the injection-moulded part has a film of plastic (8) with translucent regions which forms a visible surface of the injection-moulded part and is bonded with the light-guiding element (1, 7) in such a way that the light leaves through the translucent regions of the film of plastic (8).

14. Injection-moulded part according to Claim 13, **characterized in that** transilluminated symbols are arranged on the film (8).

15. Injection-moulded part according to one of Claims 12-14, **characterized in that** it is an actuating element of a motor vehicle.

16. Injection-moulded part according to Claim 12, **characterized in that** it is an illuminated pointer element.

17. Injection-moulded part according to one of Claims 12-16, **characterized in that** the reflection area (4, 11) is arranged in relation to the light-entering area (3) of the light-guiding element (1, 7) at an angle which is greater than 30° and less than 70°.

18. Injection-moulded part according to Claim 17, **characterized in that** the reflection area (4, 11) is arranged in relation to the light-entering area (3) of the light-guiding element (1, 7) at an angle of 45°.

19. Injection-moulded part according to one of Claims 12-18, **characterized in that** the light-guiding element (1, 7) and/or the non-translucent component (6, 13) consists of an amorphous thermoplastic material.

20. Injection-moulded part according to Claim 19, **characterized in that** the thermoplastic material is polymethyl methacrylate, polycarbonate or polystyrene.

21. Injection-moulded part according to Claim 19, **characterized in that** the light-guiding element (1, 7) consists of an amorphous thermoplastic material and the non-translucent component (6, 13) consists of an opaque amorphous thermoplastic material or of a blend.

22. Injection-moulded part according to Claim 19, **characterized in that** the light-guiding element (1, 7) consists of an amorphous thermoplastic material and the non-translucent component (6, 13) consists of a semicrystalline plastic.

## Revendications

1. Procédé de fabrication par injection d'une pièce comportant plusieurs composants, ayant une fonction optique d'affichage, en particulier pour la mise en oeuvre dans un véhicule automobile, consistant à réaliser une première pièce obtenue par injection, constituée d'une masse de matière plastique transparente à la lumière comme élément conducteur de la lumière (1, 7) comportant une surface d'entrée de la lumière (3, 10) et une surface de sortie de la lumière (5, 12), et à surmouler partiellement l'élément conducteur de la lumière (1, 7) avec une deuxième masse de matière plastique (6) non transparente à la lumière,
**caractérisé en ce que** l'élément conducteur de la lumière (1, 7) présente un prolongement en forme de languette (2, 9), qui est déformé par l'action d'une force, de telle façon qu'entre le prolongement (2, 9) et une surface partielle de l'élément conducteur de la lumière (1, 7), soit réalisé un espace creux (14) en forme de fente, et qu'au moins le prolongement (2, 9) soit surmoulé avec la masse de matière plastique (6, 13) non transparente, en laissant libre l'espace creux (14) en forme de fente.

2. Procédé suivant la revendication 1, **caractérisé en ce que** la déformation du prolongement (2, 9) est produite par la pression intervenant lors du surmoulage avec la deuxième masse de matière plastique (6, 13) et/ou par la température apparaissant dans cette opération.

3. Procédé suivant la revendication 1, **caractérisé en ce que** la déformation du prolongement (2, 9) est produite d'une façon mécanique avant le surmoulage de l'élément conducteur de la lumière (1, 7) avec la deuxième masse de matière plastique (6, 13).

4. Procédé suivant l'une des revendications précédentes, **caractérisé en ce que** l'élément conducteur de la lumière (1, 7), avant le surmoulage avec la deuxième masse de matière plastique (6, 13), est relié par conjugaison de matériaux, à une feuille de matière plastique (8) constituant une surface visible de la pièce injectée.

5. Procédé suivant la revendication 4, **caractérisé en ce qu'**on injecte partiellement la deuxième masse de matière plastique derrière la feuille de matière plastique (8).

6. Procédé suivant l'une des revendications précédentes, **caractérisé en ce que** l'on utilise des masses de matière thermoplastique amorphe.

7. Procédé suivant la revendication 6, **caractérisé en ce que**, comme masses de matière plastique, on utilise du polyméthylacrylate, du polycarbonate, ou du polystyrol.

8. Procédé suivant la revendication 6, **caractérisé en ce que** l'élément conducteur de la lumière (1, 7) est réalisé à partir d'une matière thermoplastique amorphe et **en ce que** les composants non transparents à la lumière sont réalisés à partir d'une matière thermoplastique amorphe opaque ou à partir d'un mélange.

9. Procédé suivant la revendication 6, **caractérisé en ce que** l'élément conducteur de la lumière (1, 7) est réalisé à partir d'une matière thermoplastique amorphe, et **en ce que** les composants non transparents sont réalisés à partir d'une matière plastique partiellement cristalline.

10. Procédé suivant la revendication 4, **caractérisé en ce que** la feuille de matière plastique (8) est appliquée par pression contre l'élément conducteur de la lumière (1, 7) et est reliée, par conjugaison de matériaux, à la plaque par l'application sous pression.

11. Procédé suivant la revendication 10, **caractérisé en ce que** l'élément conducteur de la lumière (1, 7) est refroidi après la fabrication par le procédé par injection jusqu'à ce que soit obtenue la rigidité de forme et **en ce que** la feuille de matière plastique (8) est appliquée sur une surface de l'élément conducteur de la lumière (1, 7) refroidi jusqu'à obtenir la rigidité de forme.

12. Pièce obtenue par injection, comportant plusieurs composants, ayant une fonction optique d'affichage, en particulier pour la mise en oeuvre dans un véhicule automobile, constituée d'au moins un composant transparent à la lumière, réalisé comme élément conducteur de la lumière (1, 7), et d'au moins un composant non transparent (6, 13) qui entoure partiellement l'élément conducteur de la lumière (1, 7), tandis que, pour réaliser la fonction d'affichage, est réalisée un conducteur de lumière depuis une surface d'entrée de la lumière (3, 10) jusqu'à une surface de sortie de la lumière (5, 12) de l'élément conducteur de la lumière (1, 7),
**caractérisée en ce que** l'élément conducteur de la lumière (1, 7) présente une surface de réflexion intérieure (4, 11), contre laquelle la lumière incidente provenant de la surface d'entrée de la lumière (3, 10) est renvoyée par réflexion totale et qui est séparée, par une fente (14), d'une autre zone partielle de l'élément conducteur de la lumière (1, 7), au moins l'autre zone partielle étant recouverte par le composant (6, 13), non transparent.

13. Pièce obtenue par injection suivant la revendication 12, **caractérisée en ce qu'**elle présente une feuille de matière plastique (8) qui en forme une surface visible qui comporte des zones transparentes à la lumière, et qui est reliée à l'élément conducteur de la lumière (1, 7) de telle façon que la sortie de la lumière se fasse par ses zones transparentes.

14. Pièce obtenue par injection suivant la revendication 13, **caractérisée en ce que**, sur la feuille (8), sont disposés des symboles transparents.

15. Pièce obtenue par injection suivant l'une des revendications 12 à 14, **caractérisée en ce qu'**elle est un organe d'actionnement d'un véhicule automobile.

16. Pièce obtenue par injection suivant la revendication 12, **caractérisée en ce qu'**elle est un élément d'aiguille pouvant être éclairé.

17. Pièce obtenue par injection suivant l'une des revendications 12 à 16, **caractérisée en ce que** la surface de réflexion (4, 11) est disposée, par rapport à la surface d'entrée de la lumière (3) de l'élément conducteur de la lumière (1, 7), sous un angle qui est plus grand que 30° et plus petit que 70°.

18. Pièce obtenue par injection suivant la revendication 17, **caractérisée en ce que** la surface de réflexion (4, 11) est disposée par rapport à la surface d'entrée de la lumière (3) de l'élément conducteur de la lumière (1, 7), sous un angle de 45°.

19. Pièce obtenue par injection suivant l'une des revendications 12 à 18, **caractérisée en ce que** l'élément conducteur de la lumière (1, 7) et/ou le composant non transparent à la lumière (6, 13) sont constitués d'une matière thermoplastique amorphe.

20. Pièce obtenue par injection suivant la revendication 19, **caractérisée en ce qu'**il s'agit, pour la matière thermoplastique amorphe, de polyméthylmétacrylate, de polycarbonate ou de polystyrol.

21. Pièce obtenue par injection suivant la revendication 19, **caractérisée en ce que** l'élément conducteur de la lumière (1, 7) est constitué d'une matière thermoplastique amorphe et **en ce que** le composant non transparent (6, 13) est constitué d'une matière thermoplastique amorphe opaque ou d'un mélange.

22. Pièce obtenue par injection suivant la revendication 19, **caractérisée en ce que** l'élément conducteur de la lumière (1, 7) est constitué d'une matière thermoplastique amorphe et **en ce que** le composant non transparent (6, 13) est constitué d'une matière plastique partiellement cristalline.
